# EUROPEAN PATENT SPECIFICATION

(11) **EP 2 836 648 B1**
(45) Date of publication and mention of the grant of the patent: **06.04.2016**
(21) Application number: 13717837.2
(22) Date of filing: 11.04.2013
(51) Int. Cl.: E02D 27/52, E02D 27/42, E02B 17/02

(54) **OFFSHORE STRUCTURE INSTALLATION**
OFFSHORE-STRUKTURANLAGE
INSTALLATION DE STRUCTURES OFFSHORES

(30) Priority: 11.04.2012 GB 201206400
(43) Date of publication of application: 18.02.2015
(73) Proprietor: Offshore Group Newcastle Limited, Tyne and Wear NE28 6HL (GB)
(72) Inventor: GLUKHOVSKOY, Kirill, Wallsend Tyne and Wear NE28 6HL (GB); KENNEDY, Graham, Howie, Wallsend Tyne and Wear NE28 6HL (GB); WREN, Jonathan, Michael, Wallsend Tyne and Wear NE28 6HL (GB)
(74) Representative: Stratagem IPM Limited
(86) International application number: PCT/GB2013/050945
(87) International publication number: WO 2013/153395

(56) References cited:
- WO-A1-2010/147481
- FR-A1- 2 231 818

## Description

The present invention is directed towards offshore structures and their installation. In particular, although not exclusively, it is directed towards the installation of offshore support, tower or foundation structures, such as those required for offshore wind turbines, meteorological masts, elements of power transmission infrastructure such as substations and power converters, and other offshore wind farm infrastructure, and even more particularly towards support structures of the 'spaced frame' or 'jacket' type, normally manufactured in steel. It will however be appreciated that the invention may be directed towards other, similar uses, such as foundations for oil or gas platforms.

The systems that are currently used as steel foundation structures for wind turbine generators (WTGs), nominally but not solely in waters over about 15m in depth, consist of 4 piles (hollow steel tubes) driven into the sea bed, into which are inserted the lower ends of the legs of a 4-legged steel structure (the 'jacket'). This jacket structure in essence comprises 4 legs and various 'K' and cross-braces which give it stability and strength. At the top end of the jacket is typically a 'transition' piece or element which attaches to the top ends of the legs and to which the tower of a WTG is secured, typically by either a grouted or a bolted flanged connection. Transition pieces or elements are of various designs which fulfil the necessary tasks of holding the WTG tower and transmitting loads from the WTG tower to the main load-bearing legs of the jacket. Such transition pieces or elements may include a hollow cylindrical steel body.

A similar method for installation of a jacket is also known from the document WO 2010/147 481 A1.

The piles are inserted into the sea bed in desired spatial relation to one another, sometimes by use of a 'pile guide template'. In essence the template is a structure with an arrangement of 2 or more (usually 4) holes in it-it is placed on the sea bed and then steel piles are driven substantially vertically into the sea bed through the holes. The pile guide template is then removed, leaving just the vertical steel piles in place. The piles are nominally hollow steel tubes. The jacket structure is then lowered into the water and the legs stabbed or guided into the piles. Grout is then introduced into void to securely fix the legs to the piles. The detailed arrangements of the pile/leg connection may have a variety of forms but are essentially a vertical pile with jacket leg connected to it by grout to create a strong permanent joint.

Due to the need to perform grouting operations at the same time as or soon after the jacket structure is emplaced within the piles, and the fact that installation of jacket structures is an operation that can be sensitive to weather and therefore in some places to the time of year, these current standard systems, procedures or approaches can limit the periods during which installation of a jacket can occur and/or the rate at which a series of such jackets can be installed. Alternatively, it may mean the difference between the use of a Dynamically Positioned crane vessel as opposed to a 'jack-up' or 'semi-sub' type vessel, which has its own time and cost implications.

It is an object of the current invention to improve upon these approaches, lessening the scope of these limitations and also provide alternative, more cost-effective methodology for installation.

Accordingly, there is provided a method of installing an offshore support structure according to claim 1.

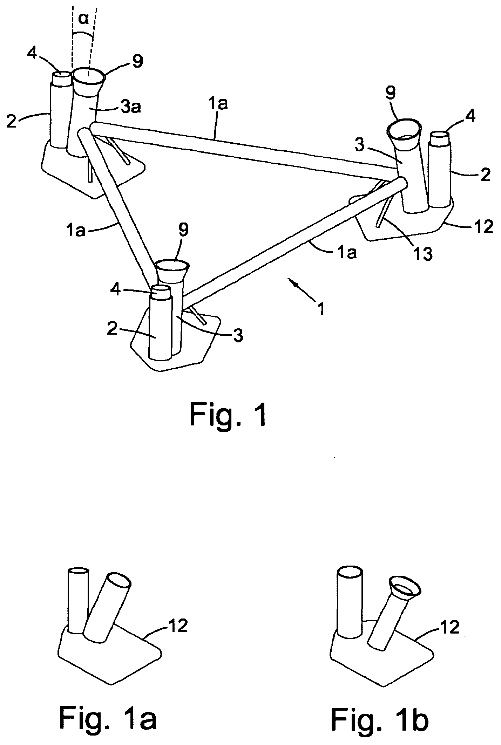

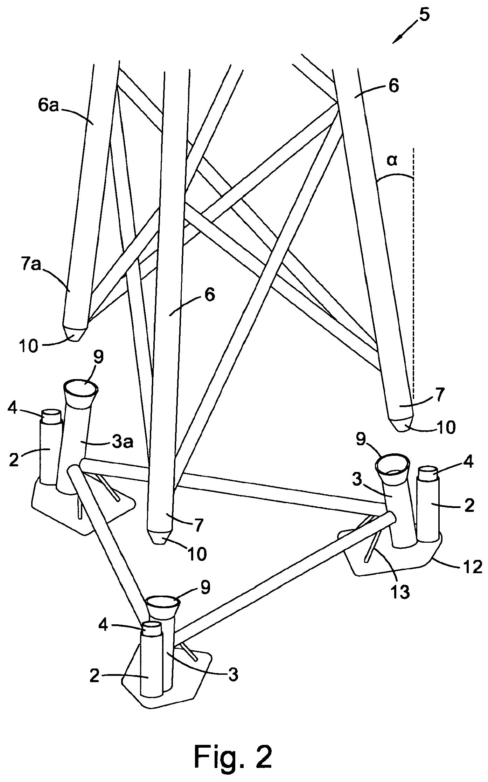

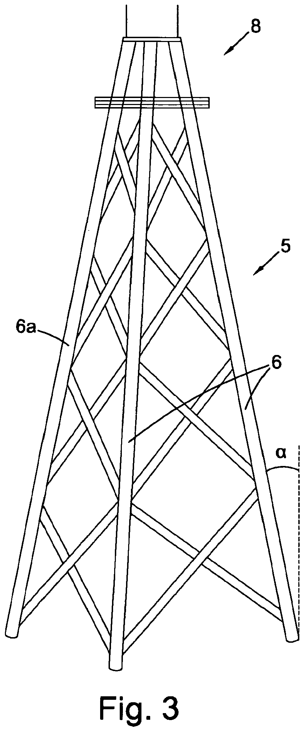

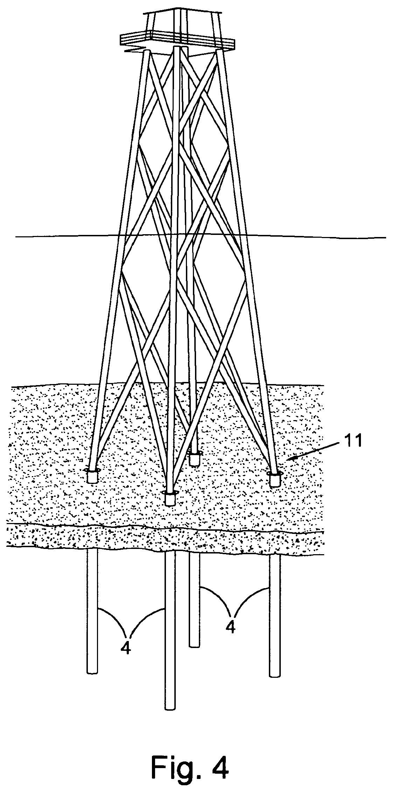

By way of example and in reference to the attached Figures, Figure 1 shows an example of a pre-installation subframe in accordance with the invention; Figure 2 shows an example of a jacket structure being emplaced upon a pre-installation subframe; Figure 3 shows a jacket structure for use in accordance with the invention; Figure 4 shows an example of a typical prior art jacket structure in place upon piles driven into a sea bed. Figures 1a and 1b show alternative possible arrangements for parts of the pre-installation subframe.

Figure 1 shows a pre-installation subframe (1) comprising a body structure, pile guide holes (2), and installation points (3, 3a), one of which, in a preferential embodiment of one aspect of the invention, protrudes higher than the others (3a). Preferentially, each installation point features a conical guide or flared end (9) to assist installation of the engagement points (7, 7a) of a jacket structure (5). The pre-installation subframe (1) is placed in position on the sea bed. Piles (4) are driven through the holes (2) and then grouted in place. Advantageously this series of operations can be performed in a relatively wide range of sea states and weather conditions, and the requirement for an operation to remove and/or move a prior art standard pile guide template after pile installation is also negated, saving time on location with an expensive construction vessel. In particular, these operations can be performed in relatively wintry/rough sea conditions using a Dynamically Positioned construction support vessel instead of a 'jack-up' or 'semi-sub' type vessel as nominally currently required.

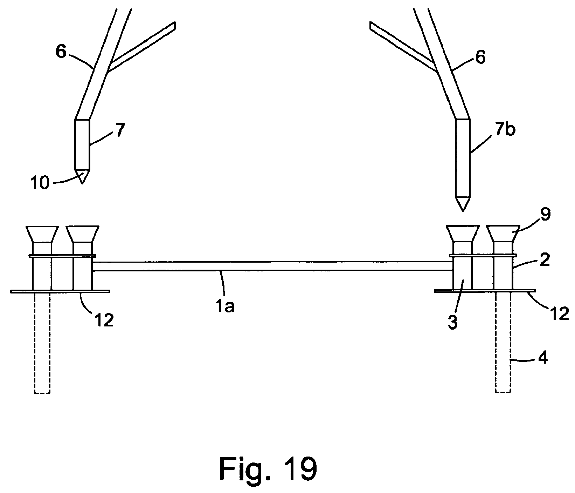

Subsequently (Figure 2), jacket structure (5) is lowered onto the pre-installation subframe such that engagement points of the structure (7, 7a), in this case the lower ends of the main jacket legs (6, 6a), engage in the installation points (3, 3a). Another preferred aspect of the invention is shown in that one of the legs (6a) of jacket structure (5) engages the higher installation point (3a) first, thereafter enabling guidance of the other two legs (6) into their installation points (3). In the illustrated embodiment (Figure 2), leg 6a is shorter than the other two legs 6. In alternative embodiments, a converse arrangement is that one of the installation points does not protrude as high as the others whilst the corresponding jacket leg is longer than the others; or, simply that one of the jacket legs or one of the installation points (7b) alone is longer (Figure 19). Each of these alternative embodiments gives the same advantage of one installation point / engagement point combination connecting first and then acting to guide the remaining engagement points into their respective installation points, thus aiding the installation. In one embodiment, as shown in Figure 19, the lower ends (7, 7a, 7b) of the main legs of the jacket structure may be angled in relation to the remainder of the main legs so that they sit vertically when installed, and it is this lower vertical section of the main leg that may vary in length (7b) so as to provide the initial engagement of one lower leg section prior to the engagement of and enabling the guidance of the other legs, as described previously.

Once the engagement points are connected to the installation points, the connections thus made between the installation points (3, 3a) and jacket structure legs (6, 6a) are then grouted to make a strong, permanent connection securing the jacket to the seabed. A further preferred aspect shown is that each of the jacket structure legs (6, 6a) is provided with a conical stabbing end (a 'stab cone') (10) which aids in location of the leg ends in the installation points.

In an alternative advantageous embodiment, the engagement points (7, 7a) and/or the installation points (3, 3a) may be provided with parts of a quick-locking mechanism so that the jacket merely has to be dropped into place without the necessity for further operations such as grouting. By way of example, industry standard fixings such as Swage-Loc™ mechanical fixings may be used. This has clear time and cost saving implications, particularly on a large offshore wind farm for example, where hundreds of units may require installation and the number of days of weather suitable for moving jackets around to install them may also be limited.

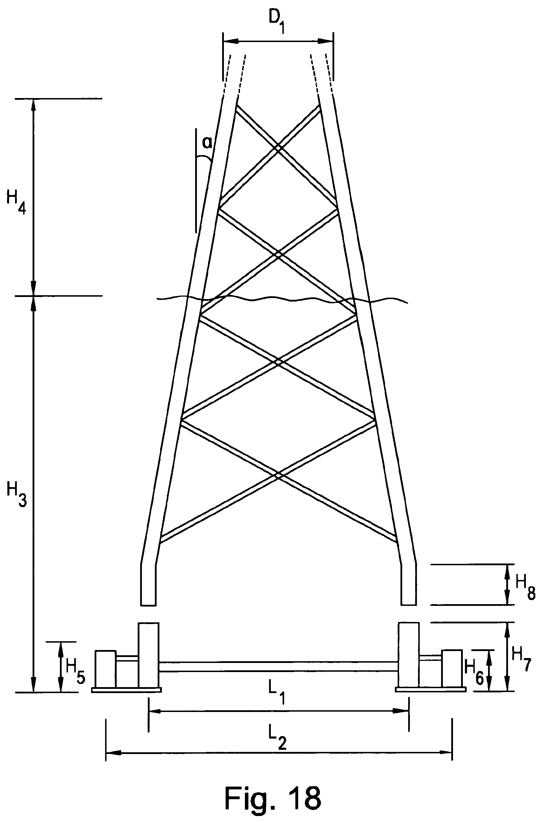

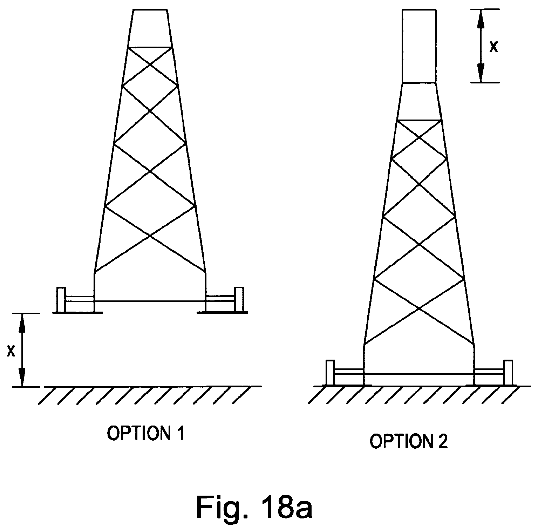

An advantage of the invention is that the installation points can be fabricated on the pre-installation subframe so as to sit with their axes at an angle (α) from the vertical so as to align exactly with any angle (α) from the vertical of the installed main jacket legs, negating the requirement to fabricate main jacket legs with a bend (11) in them (as per standard prior art jackets as illustrated in Figure 4) to fit into vertically installed piles, which firstly may constitute a weak fatigue sensitive point in the leg and secondly requires a number of extra steps in fabrication of the jacket such as cutting and welding. A further advantage of this arrangement is that once the jacket is installed upon the subframe, the inward incline of the installation points and the legs therein gives the combined structure a degree of natural stability, even prior to grouting, which is not inherent in a prior art arrangement where all the legs sit substantially vertically within vertically driven piles. The installation points can however be fabricated so as to sit vertically when the pre-installation subframe is installed, with the lower ends of the upper jacket section legs also fabricated to be vertical, as shown in, for example, Figures 18 and 19, where this is more convenient or preferable.

As an alternative to the embodiments of the invention shown or previously described, the legs (6, 6a) may be plain poles (hollow or solid), or provided with any other connection standard known in the art, with or without the necessity or desirability of subsequent grouting once connected to the installation points (3, 3a).

In the embodiment shown in Figures 2 and 3, the jacket structure (5) has 3 main legs (6, 6a) and is a jacket for supporting a WTG tower. Conventionally, jackets have 4 main legs, largely to provide redundancy in the event of a collision with the jacket by, for example, a ship - a convention generated in the oil and gas industry where single platforms, supporting manned oil or gas rigs, may sit in relatively isolated and exposed positions and where the consequences of failure would be catastrophic both in terms of potential loss of life and environmental pollution. In a preferred application, the jacket will be one of many (perhaps hundreds or thousands) gathered in relatively close proximity in a 'wind farm'. Such a field of jackets supporting WTGs would be likely to be protected by a 'no sail' zone and would furthermore be much more visible. Also, the consequence of failure of these largely unmanned structures would be comparatively low - usually the structural collapse of one WTG. Accordingly, a 3-legged structure is preferable and offers the benefits of less fabrication, lower material use, and a proportionally lighter jacket that is easier to transport and install - all with associated cost benefits.

Advantageously and in a further embodiment, the pre-installation subframe allows for ready and relatively simple alignment of a jacket into an upright position prior to the actual installation of the said jacket. In the prior art, jackets are typically installed in the usual manner as earlier described, ie: a template is put on the sea bed; piles are put through the template into the sea bed; the template is removed; the jacket is lowered onto the piles, with the legs of the jacket fitted directly into the piles and then grouted into place (Figure 4). Levelling of such a tower is usually achieved by one of three methods; either the piles, once installed into the sea bed, are trimmed or cut so that their upper ends are all level with each other and the jacket is thus level provided its legs all fit directly into the piles by the same amount, or; the piles, once installed into the sea bed, are measured for stickup and the jacket legs are trimmed or cut so that their lengths ensure that the jacket, when installed, is level provided its legs all fit directly into the piles by the same amount, or; whilst the tower is being installed, it is levelled off by measurement and held in position whilst grout is installed and during initial drying. The first of these methods gives rise to the necessity to perform an accurate cutting of a number of piles installed underwater in such a manner that they all rise to the same height. The second method requires remedial work to an already manufactured jacket structure, either after relaying measurements back to a manufacturing yard or, even more inconveniently, whilst the jacket is on a vessel awaiting deployment. The latter method requires a large and expensive rig, jack-up or semi-sub vessel in order to hold an entire jacket in place and move it about incrementally to achieve precise alignment. The advantage of a jacket correctly aligned so as to be truly vertical is that a WTG tower may be bolted to the upper end of said jacket or its transition piece (8) with little requirement for fettling or further adjustment, and the associated extra cost of time on site. A jacket that is not 'true' to the vertical may well require more laborious fitting of a WTG tower, including the fitting of shims or other adjustments, or the use of grout.

In this aspect of the present invention, where a pre-installation subframe (1) comprising a lightweight steel frame of cross-braces (1a) and including pile guide holes (2) and installation points (3) for the lower ends of jacket legs is used, a method of allowing for the installation of a jacket that is level and stands vertically that is an improvement over the prior art is presented.

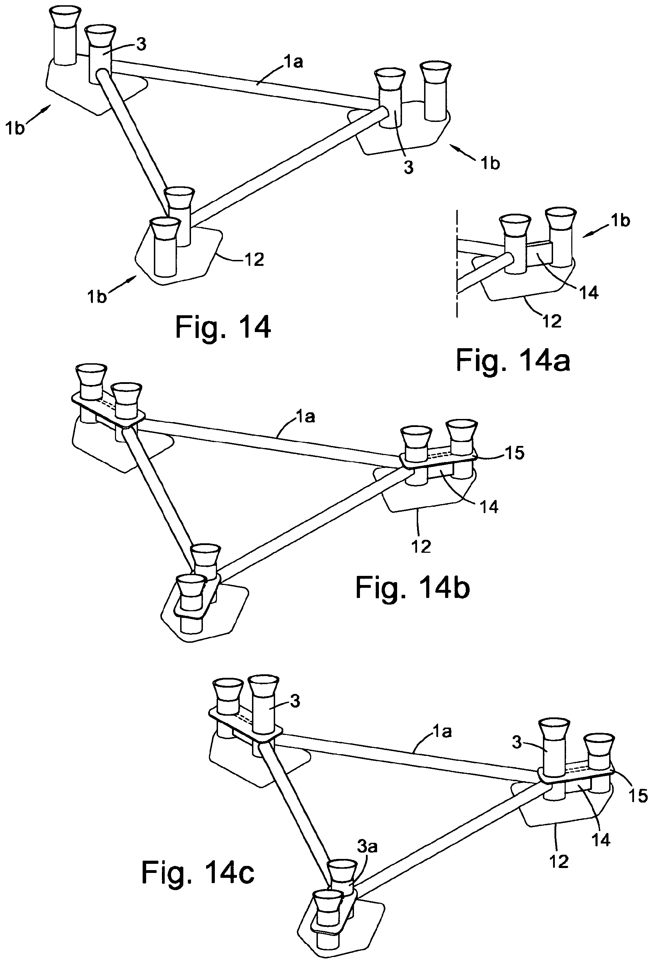

In an exemplary embodiment, the pre-installation subframe comprises three tubular steel components (3, 3a) to act as installation points for the lower ends (7, 7a, 7b) of the legs (6, 6a) of a jacket, each of which installation points is connected to the two others by means of steel pipe framework (1a) or cross-braces (1a), preferably forming a simple triangular planform overall (Figures 1, 10, 14). Each steel tube (3, 3a) for acting as an installation point is also connected at its bottom end to a flat plate or mudmat (12) which itself is connected to a further steel tube (2), preferably lying outside the triangular planform, for acting as a pile guide (2) for insertion of a pile (4) into the sea bed. Particular and preferred embodiments of this may be seen in Figures 1, 10, 14a, 14b, 14c. It can be seen that the pre-installation subframe (1) essentially comprises upright hollow tubes to act as pile guides or pile sleeves, which pile guide/sleeves are connected by flat mudmats to further hollow tubes, substantially upright, which act as installation or anchor points for the lower ends of the legs of an upper section of jacket structure. Each installation/anchor point is connected to two other installation/anchor points by means of substantially horizontal tubular components or crossbraces (1a). Further stiffening members in the form of rods (13), plates (14, 15) or other tubular components may be included to provide extra strength and/or to alter the Natural Frequency properties of the structure (Figures 1, 2, 14a, 14b). Preferably the pile guides and the installation points are further provided with conical guides or flared ends (9) as previously described and as shown in various of the accompanying Figures. These assist in the location of, respectively, piles and the lower parts of the main legs of an upper jacket section. It can be seen that the pre-installation subframe essentially comprises the lower section of a two-piece jacket structure, the upper section (5) of which is installed as elsewhere herein described. Preferably the pre-installation subframe is fabricated from steel. The upper section of the jacket is also preferably fabricated from steel. In the preferential embodiment shown, there are three pile guides and three related installation points, each pile guide connected to an installation point by a mudmat to form a pile guide/installation point/mudmat substructure (1b), and three connecting cross-braces (1a) connecting each substructure, in the embodiment shown (esp. Figure 14/14a/14b) by virtue of connection to the tubular sections (3) embodying the installation points. The subframe thus acts as the lower jacket section of a three-legged jacket. It will be appreciated that there could be four pile guide/installation point/mudmat substructures connected by four crossbraces, or even larger integers, although three is advantageous in terms of structural lightness and manufacturing efficiency and is the preferred embodiment. In contrast to prior art arrangements where a substantial structure is emplaced on a sea bed as a foundation and a jacket is essentially simply placed on top, the current invention includes a pre-installation subframe that also itself functions as the lower section of the full jacket structure, with the further advantage that the pre-installation subframe is a lightweight frame structure that comprises the minimum of components, so that it is easy to install and requires the minimum of support vessels and other support infrastructure during the installation. The intention is to reduce the overall cost of installation by minimising manufacturing time, manufacturing facility requirements, installation time and the amount of installation infrastructure (support vessels, etcetera) required to perform, in particular, a large number of installations. Preferably the cross braces (1a) of the pre-installation subframe are intended to perform the task of what would otherwise be a lower set of crossbraces between the main legs (6, 6a) of the remainder of the jacket structure. In other words, the jacket itself is not actually structurally complete until the upper section is mated to the pre-installation subframe. In this way excess structure that would be necessitated by installation of a foundation and subsequent installation of a jacket is avoided - in essence a section of the jacket is pre-installed and then subsequently the 'rest' of the jacket is installed upon it. The pre-installation section is as lightweight as possible, comprising the minimum possible number of elements in order to fulfil its necessary functions (providing a pre-installation subframe, providing structural rigidity to the lower end of the jacket, not sinking into the sea bed, allowing for levelling, providing pile guide holes and installation points for the upper section of the jacket). Conceptually it can be seen that this is novel and inventive over the prior art.

Because the pre-installation subframe is a simple and light steel framework, it allows for easy levelling. As previously described, the subframe may be laid on the sea bed and then piles installed through the pile guide holes. The pile guide holes preferably are a relatively loose fit to the piles themselves. The piles do not then need to be cut off, as is the case with standard prior art installations where a jacket is installed directly on to piles, but may be left extending upwards to whatever height they happened to be left at after installation. All that is required then is that the lightweight pre-installation subframe be levelled off and grouting installed to fix it to the piles. Subsequently, once the jacket upper part is lowered onto the installation subframe, the subframe of the jacket is automatically level and the whole jacket structure will be vertical as desired, without the necessity for difficult levelling of an entire jacket structure.

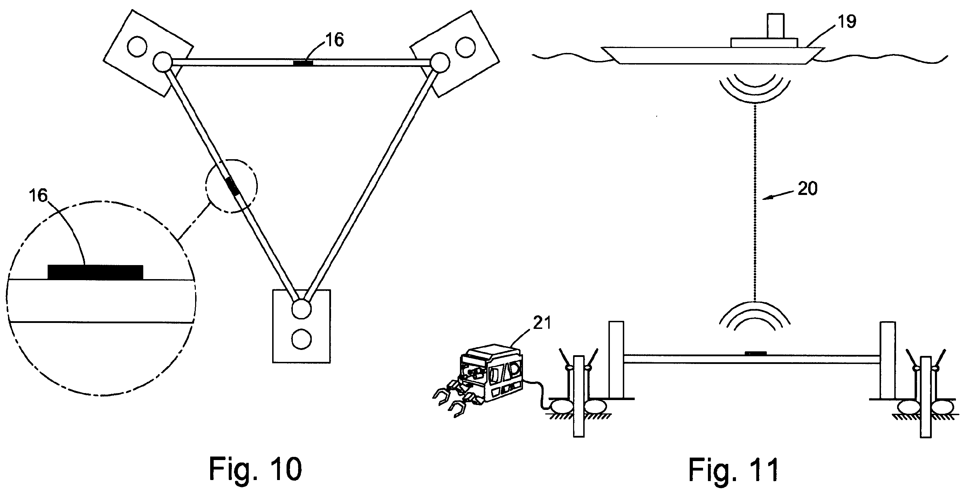

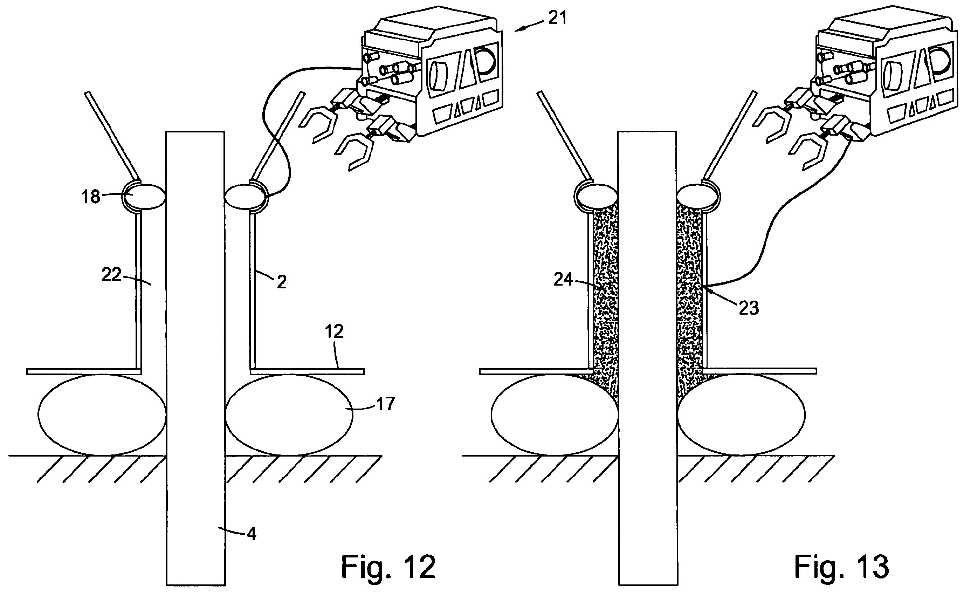

One method of pre-installation subframe levelling is as follows and as illustrated in Figures (8-13); prior to the lowering of the pre-installation subframe to the sea floor, level sensors (16) fitted with transmitters are fitted to two of the three crossbraces (1a). Beneath each of the mudmats is a levelling bag (17) and within each of the pile guides is a sealing bag (18). The pre-installation subframe is lowered to rest on the sea bed and the piles (4) are installed as guided by the pile guide holes (2). The level sensors on the crossbraces connect (20) by transmitter to an installation vessel (19) lying on the surface of the water and the highest lying mudmat is determined by taking readings thus transmitted from the level sensors. A Remotely Operated Vehicle (ROV) (21) is connected to the levelling bag beneath the highest lying mudmat (Fig 11), and fluid such as air or water is pumped into the bag to slightly raise the mudmat and seal the levelling bag between the mudmat and the seafloor. The ROV is next connected to the levelling bag of the lowest lying mudmat and fluid is pumped into the bag to raise the mudmat until one of the two levelling sensors reads horizontal. This operation is repeated for the remaining mudmat/levelling bag until the second levelling sensor also reads horizontal. The pre-installation subframe is now level. The ROV is connected in turn to each of the sealing bags (18) at the top end of each pile guide (Fig 12) and fluid pumped into the bags so as to seal the annulus (22) between the pile and the pile guide. The ROV is then connected to a valve (23) in each of the pile guides and grout (24) is pumped into the annulus gap between each pile guide and its corresponding pile so as to secure the pre-installation subframe to the piles. When the annulus gap (22) between pile guide and pile is full of grout (24), surplus grout may start to escape from the annulus gap via the sealing bags, and this is an indicator that the grouting operation is complete.

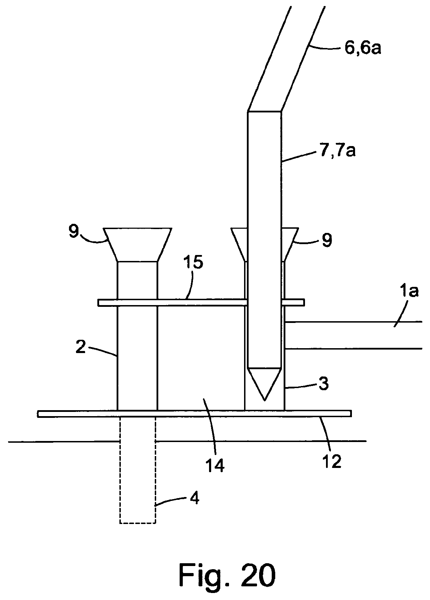

By way of example, Figure 20 shows a detailed sectional view of part of an installed jacket structure where the pre-installation subframe (1) is piled to the sea bed and grouted in place, the upper jacket section (5) is installed in the installation points (3) by means of the lower ends (7) of the main legs (6) and similarly grouted in place, and the mudmat (12) is displaced vertically a short distance above the sea bed having been raised by a levelling device during installation - the whole assembly now constituting a complete jacket capable of withstanding the expected design stresses of a structure supporting a wind turbine generator, with pre-installation subframe crossbrace member 1a providing part of the structural strength of the complete jacket.

In a further preferred embodiment (Figure 3), the jacket structure (5) has main legs (6, 6a) that taper inwards towards the top end of the tower - once the jacket is installed, they therefore sit at an angle (α) from vertical. The jacket structure is provided with a transition piece (8) which is connected to the legs (6, 6a). In one embodiment, the transition piece (8) may be partially or fully filled with substance such as concrete so as to increase the mass of this point of the structure. Such a mass is intended to act as a damping mechanism to prevent or reduce undesirable sway or harmonic motions or vibrations of the structure, which for ease of fabrication and installation may otherwise have been designed to be as light as possible. The addition of substance can and would advantageously occur once the structure has been installed as previously described.

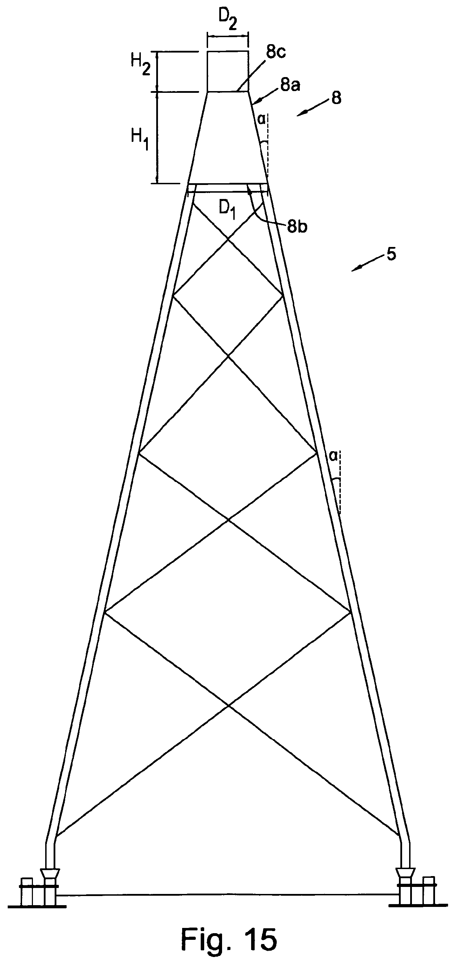

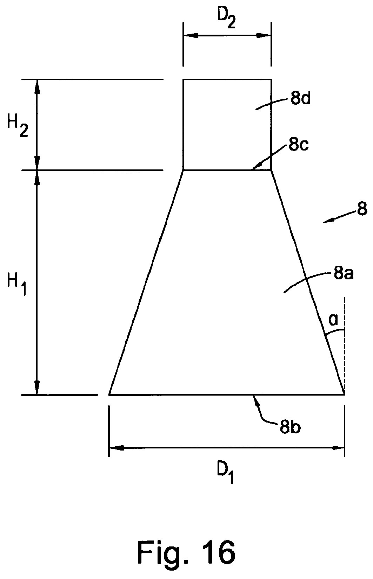

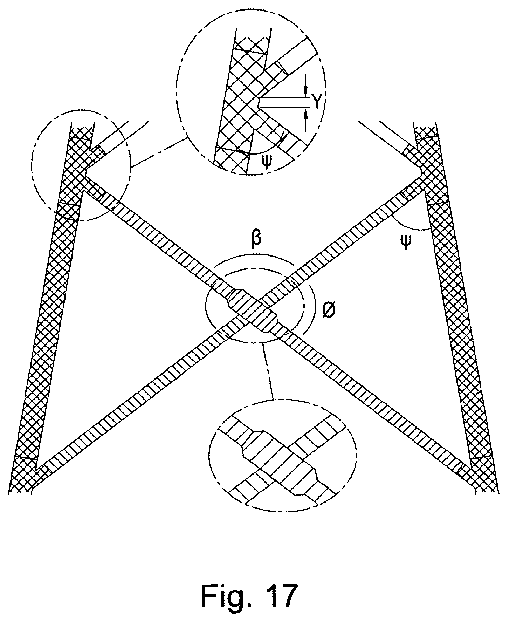

In another aspect, the jacket is provided at its upper end with a transition piece (8), as previously described (Figures 15 and 16). In this alternative embodiment, the transition piece is generally in the form of a generally hollow frusto-conical body (8a), the lower 'base' end (8b) of the transition piece sitting at the top of the jacket and the upper end of the frusto-conical body of the transition piece (8c) engaging with the lower end of a turbine tower. In a preferred embodiment, the angle from vertical of the sides of the transition piece is the same angle (α) as that of the legs (6) of the jacket. This allows for greater ease of manufacture, particularly at the point where the transition piece mates to the jacket (5). A turbine tower may be affixed to the transition piece in one of two ways; either a flange may be provided at the top of the transition piece and the bottom of the turbine tower, and the two bolted together; or the base of a turbine tower may be literally inserted into the hollow upper end of the transition piece and the two grouted together. A problem normally encountered is how to affix varying turbine towers to any particular transition piece design. In the present instance, it may be seen that whilst (α) remains constant for the transition piece, simple variance of the height (H1) of the transition piece will result in a variance of the diameter (D2) of the upper end (8c) of the frusto-conical body (8a) of the transition piece (8), whilst the diameter (D1) of the base (8b) of the transition piece may remain constant. This allows for very simple design variance in order to accommodate various turbine towers of varying diameter, whether of the 'bolted flanged' or 'inserted and grouted' installation type.

In a slightly alternative embodiment, the transition piece may further comprise a generally hollow cylindrical element (8d) affixed to the upper end of the frusto-conical body, as shown in figures 15, 16, and 18a (option 2). The diameter of this element (D1) will naturally vary with the diameter (D1) of the upper end (8c) of the frusto-conical element (8a) as the height (H1) varies, but variations to the height (H2) of the cylindrical element will allow for very simple variation of the overall height of the jacket and transition piece combination, which may be advantageous for differing design of wind turbine generator that may be affixed to any wind turbine tower installed upon the jacket. In the modular construction described hereinafter, this variation in height (H2) of the cylindrical element may be one means by which the overall height of a jacket may be varied in a manner which provides for ease and cost-efficiency of manufacture, particularly where a large number of jackets are required to be manufactured of slightly varying (in the order of 5m variation) heights due to natural slight variation in water depth due to undulations of a sea bed over the area of a planned wind farm.

In a further aspect of the invention, there is provided a two-part jacket (5, 1) with a modular structure wherein a range of water depths may be accommodated by said jacket, the upper section of which is manufactured to one of a limited number of basic geometries and the lower section of which, which may be an initially separate component, also comprises one of a limited number of alternatives. The advantage of this arrangement is that a number of jackets of a range of heights may be made on a single production line using a low number of standard jigs in which, for example, the angles of cross-braces (Ø, (β, ψ) are set. In a particularly preferred embodiment, said jacket will always have main legs (6) tapering inwards towards the top end of the tower at an angle (α) from the vertical, even if the water depth for which the tower is intended varies by as much as a factor of 2. In many jacket installations, a jacket is designed to be optimised in its geometry and other arrangements so as to as be as light as possible for a given required loading. This minimises the amount of material required to build a particular individual jacket of a specific height and so can be seen as reducing cost due to minimum material. In the present invention, counterintuitively, the use of a limited number of possible basic geometries (for jacket upper section) and accompanying limited number of alternative lower sections (pre-installation subframe), may result, in any given jacket constructed for a particular water depth, in a tower that may be over-engineered, ie: is capable of sustaining a greater load than required. However, in the circumstance where many tens, hundreds or perhaps even thousands of jackets are to be built to support wind turbines in a large 'wind farm' covering a large area of sea floor of varying water depth, the ability to manufacture a large number of jackets of varying sizes without constant re-design, and on a common jig and production line where there is a great deal of commonality of parts or jig set-ups, means greatly reduced manufacturing costs, and in such a circumstance the cost of any unnecessary surplus material in any individual possibly over-engineered jacket or jackets is outweighed.

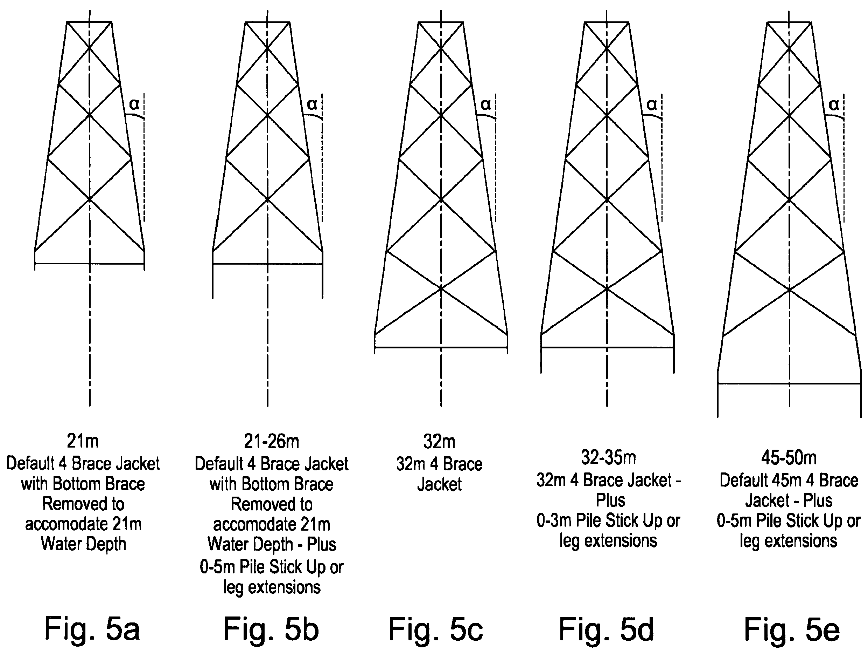

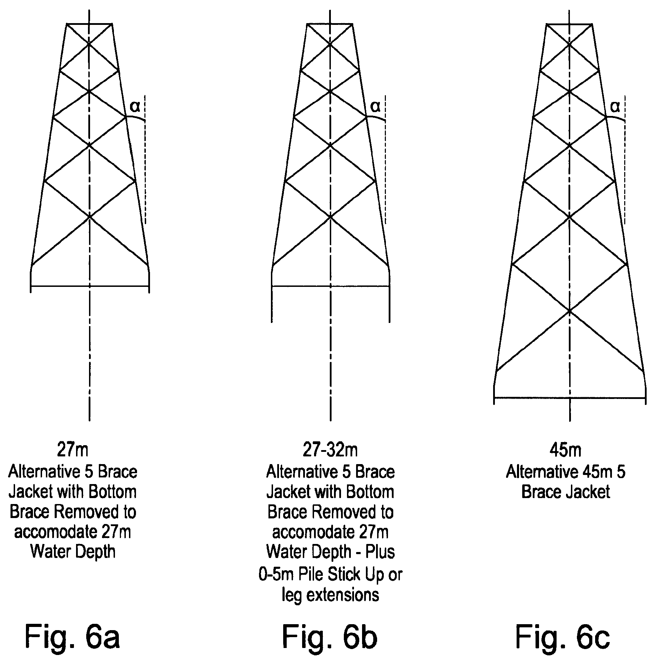

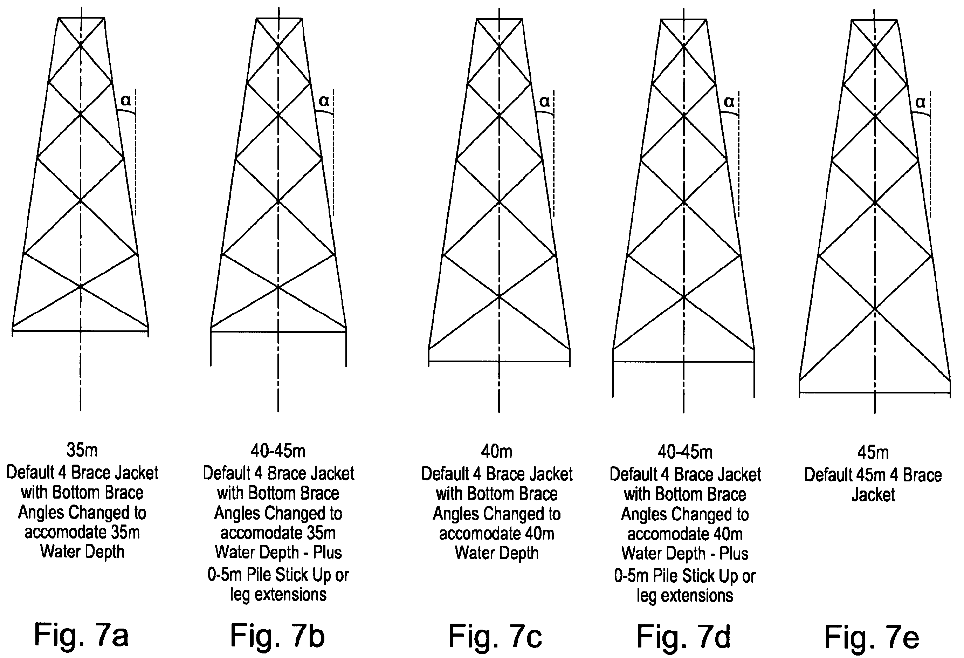

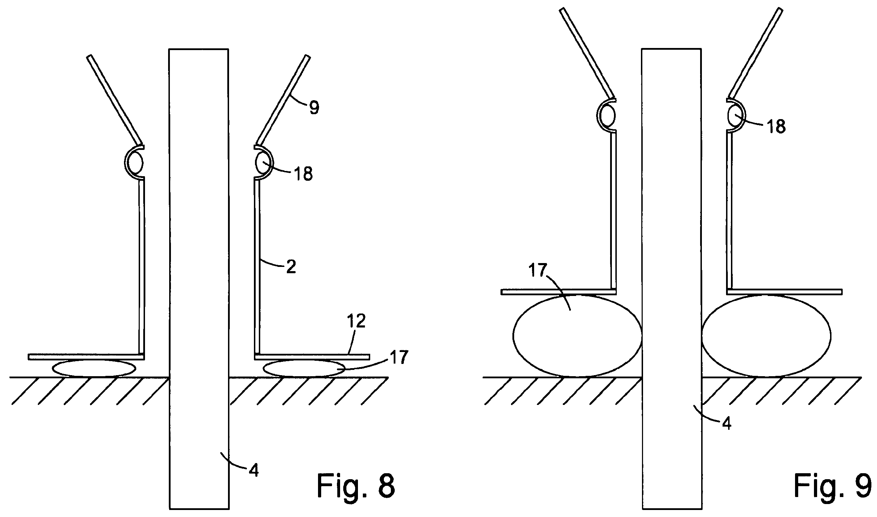

A preferred embodiment of this aspect of the invention is shown in Figures 5a to 7e, which show simplified side views of a number of jacket arrangements. It will be appreciated by those skilled in the art that these views are diagrammatic and representative line-drawings only, and that in reality the jackets will be three-dimensional constructs of 3 or more sides with a main leg at each corner, as shown in, for example, Figures 2 or 3. There are two 'default' jacket geometries - a '4-brace' jacket of 66m total height (45m water depth plus 21m of jacket which is intended to nominally protrude above the mean water line) - (Fig 7e) - and a '5-brace' jacket of the same height (Fig 6c). The heights include both the upper section and lower section (pre-installation subframe) parts of a two-part jacket structure as previously described. Using these two basic geometries, it can be seen that a range of jackets for water depths from (at least) 21m to 50m can easily be manufactured using a standardised manufacturing facility based on the jigs required to weld a limited number of variants of 'cross' and 'K-brace' joints. Figure 5a shows a jacket nominally based on the '4-brace' jacket, where the main legs of the jacket are shorter and the lowest set of braces is omitted. The only other required alteration is to the length of the crossbraces (1a) on the pre-installation subframe, and a minimum of alterations to the default 66m '4-brace' jacket thus results in a jacket of approximately 42m total height, suitable for a 21m nominal water depth. In order to be suitable for a range of depths from 21m to 26m, the only further alteration necessary is to the length of the steel tubes (3, 3a) acting as installation points (3, 3a) on the pre-installation subframe (1) - these need merely be lengthened by up to 5m to give a total jacket height of up to 47m. This is shown as Figure 5b. Figure 6a shows a '5-brace' jacket which has been produced without its lowest brace sections and proportionally shorter main legs. This gives, in this example, a total jacket height of about 48m for a water depth of 27m, whilst construction of the jacket utilises the same jigs and mostly the same parts as the default '5-brace' jacket for 45m water depth. As for the Figure 5b embodiment in relation to Figure 5a, Figure 6b shows how this Figure 6a jacket can have its height varied by up to an extra 5m, allowing a water depth of 27-32m, by simple extension of the installation points on the pre-installation subframe / lower jacket section - and the lengths of the cross-braces (1a) on the pre-installation subframe 1 are the only other variables required to build the full jacket. Figure 5c shows a 4-brace jacket in which the lowermost set of braces are welded in place at an amended set of angles and with the main legs shortened to give a 53m overall jacket height for a water depth of 32m. Commonality with the default 4-brace jacket is still however maintained for the majority of the structure. Figure 5d indicates how extension of up to 3m on the installation points on the pre-installation subframe can be used to give a jacket height to cover a 32-35m water depth range. An alternative arrangement for these embodiments as shown in Figures 5c and 5d would be that the lowermost set of braces are simply omitted from the jacket structure - the cross-bracing of the pre-installation subframe being sufficient to provide the necessary structural stiffening at the lower end of the jacket once both parts of the two-part structure are combined. This alternative also obviates the need for an alternative jig to enable manufacture of the lowest set of bracework at a different set of angles from those in the rest of the jacket structure. Figure 7a shows a 4-brace jacket in which the lowermost set of braces are welded at an alternative amended set of angles and with the main legs shortened to give a jacket suitable for a 35m water depth (56m overall height), and Figure 7b shows how this may simply be given extra height by means of up to 5m extensions to the installation points on the lower jacket section / pre-installation subframe. Figure 7c shows a 4-brace jacket in which the lowermost set of braces are welded at a further alternative set of amended angles, and Figure 7d shows how this arrangement is given up to 5m extra height by means of the use of higher installation points on the pre-installation subframe. Figures 7e and 6c show the 'default' alternative 4-and 5-brace jackets at 45m water depth or 66m total height. A further 5m of extra height to either of these arrangements is again achieved by the use of higher installation points (vertical hollow steel tubes, in essence) (3, 3a) on the pre-installation subframe, which also acts as the lower section of the two-part jacket structure.

Accordingly it can be seen that a range of jacket structures for use in a range of sea water depths, in this case 13 different variants (figs 5a to 7e) for depths of 21 to 50m with jacket heights of 42 to 71m, can be manufactured in an assembly line which is set up to handle just two main default common variant structures. From an assembly line configured to construct the 45m 4-brace and 45m 5-brace default structures, with a set angle α and a limited number of accompanying bracework angles (Ø, β, ψ), with appropriate jig and tool sets to match, can be manufactured a large number of jackets of differing sizes whilst requiring the minimum of jig and tool set-up or re-setting time. In this way a large number of jackets can be manufactured in a cost-effective manner, with a range of jacket sizes corresponding to the variances in water depth that may be present over the extended seabed surface area of a multi-tower wind farm, or even where one manufacturing facility is used to manufacture a large number of jackets for use as turbine supports at a number of locations or at a number of windfarms at a number of locations. As is seen, variation at the lower end of the jackets (where the width of the jacket naturally varies due to the angle α remaining constant for all size variants of the jacket) is achieved simply by varying the lengths of the cross-braces (1a) between the installation points (3, 3a) of the jacket lower section / pre-installation subframe (1). Many of the variants rely on changes to the lengths of the installation points (vertical hollow tubes 3, 3a) of the pre-installation subframe. In an alternative embodiment, vertical height difference can be achieved by altering the length H8 of the lower leg section of the upper jacket section, as shown in Figure 18. A further alternative embodiment is achieved by use of longer piles inserted into the sea bed through the pile guides in the pre-installation subframe - if considerable lengths of pile are left protruding above the pre-installation subframe, it is possible to raise the pre-installation subframe vertically upwards whilst retained on the piles, and then grout the pre-installation subframe in place at a significantly vertical displacement 'x' (Figure 18a Option 1) from the sea bed to achieve the same overall jacket height variance as is seen in Figures 5b, 5d, 6b, 7b, 7d and 5e by use of installation point height variance. One further variation is that the overall jacket height (including the transition piece as shown in Figure 16) is varied by alteration of a single tubular upper section (8d) of the transition piece (8) which sits above the main frusto-conical body (8a) of the transition piece. This can be seen in Figure 18a, 'Option 2', where 'x' is the height varied to give incremental changes to the overall height of the jacket, as opposed to the large step-changes to jacket height enabled by removal of sections of cross-bracing (and the associated lengths of main leg) at the lower end of the tower as previously described.

Another advantage of the present invention is that the pre-installation subframe, also seen to be the lower section of a two-part jacket, as shown in Figures 1, 2 and 14, may also act as a set of lower bracing members for the jacket. In the prior art European Patent Application 2,428,616, there is mention of a template used to secure marine apparatus to a seabed. The template is said to include a base plate that rests on the seabed, and this is shown in the accompanying figures. In contrast to this, the present invention is embodied by a low mass structure made of tubular section steel. It is clear from Figures 5a to 7e that the jacket upper section essentially consists of main legs supported by cross-braces, and as shown in the Figures in accordance with one aspect of the invention the number of cross-braces is 3 to 5 depending on water depth and configuration selection. What is also apparent is that the pre-installation subframe, or lower jacket section, comprising as it does a set of horizontal (when installed) lengths of tubular section steel (1a), is capable of acting as a bottom set of cross-braces for the overall jacket structure. This allows for a lighter construction of the upper jacket section than would otherwise be the case. The light weight of the pre-installation sub-frame means that it can be installed in higher sea states than possible with the prior art steel plate template, and/or with a greater variety of vessels. This increases the number of days in a year available for installation, particularly during winter months, and would enable large-scale wind farms to be installed in a shorter overall timeframe, enabling a number of cost savings.

## Claims

1. A method of installing a jacket for a wind turbine tower comprising the steps of;
a. Providing a pre-installation subframe (1),
b. Providing level sensors (16) fitted to twoo the cross-braces (1a) of the pre-installation subframe (1);
c. Providing a levelling system (17) beneath each mudmat (12) of the pre-installation subframe (1);
d. Providing a sealing system within each pile guide (2) of the pre-installation subframe (1), towards the upper end of each pile guide (2);
e. Placing the pre-installation subframe (1) upon the sea bed;
f. Installing piles (4) into the sea bed through the pile guides (2) of the pre-installation subframe (1);
g. Determining the highest lying mudmat (12) by means of readings from the level sensors (16);
h. Activating the levelling system (17) beneath the highest lying mudmat (12) so as to raise the mudmat (12) and create a seal between the mudmat (12) and the sea bed;
i. Determining a second mudmat (12) at the far end of a pre-installation subframe crossbrace (1a) fitted with a level sensor (16) and also connected to the highest lying mudmat (12),
and inflating the levelling bag (17) beneath said second mudmat (12) to raise this second mudmat (12) until the said level sensor (16) indicates that the attached pre-installation subframe cross-brace (1a) is horizontal;
j. Activating the levelling system (17) beneath the remaining mudmat (12) until the other level sensor (16) indicates that a second pre-installation subframe cross-brace (1a) is also horizontal;
k. Activating the sealing system (18) within each pile guide (2);
l. Pumping grout (24) into the gap between each pile guide (2) and its associated installed pile (4).

## Patentansprüche

1. Ein Verfahren für die Anbringung einer Ummantelung an einer Windkraftanlage, das folgende Schritte aufweist;
a. die Bereitstellung eines Vorinstallations-Hilfsrahmens (1);
b. die Bereitstellung von Niveaufühlern (16), die an zwei der Querstreben (1 a) des Vorinstallations-Hilfsrahmens (1) montiert sind;
c. die Bereitstellung einer Nivellieranlage (17) unter jeder Schlammmatte (12) des Vorinstallations-Hilfsrahmens (1);
d. die Bereitstellung eines Abdichtungssystems in jeder Pfahlführung (2) des Vorinstallations-Hilfsrahmens (1) zum oberen Ende jeder Pfahlführung (2);
e. die Positionierung des Vorinstallations-Hilfsrahmens (1) auf dem Meeresboden;
f. die Installation der Pfähle (4) im Meeresboden durch die Pfahlführungen (2) des Vorinstallations-Hilfsrahmens (1);
g. die Bestimmung der höchstgelegenen Schlammmatte (12) durch Ablesungen der Niveaufühler (16);
h. die Aktivierung der Nivelllieranlage (17) unter der höchstgelegenen Schlammmatte (12), um die Schlammmatte (12) anzuheben und eine Abdichtung zwischen der Schlammmatte (12) und dem Meeresboden zu schaffen;
i. die Bestimmung einer zweiten Schlammmatte (12) am entfernten Ende einer Vorinstallations-Hilfsrahmen-Querstrebe (1a), die mit einem Niveaufühler (16) ausgestattet und ebenfalls mit der höchstgelegenen Schlammmatte (12) verbunden ist, und das Aufblasen des Nivellier-Sacks (17) unter der besagten zweiten Schlammmatte (12), um diese zweite Schlammmatte (12) anzuheben, bis der besagte Niveaufühler (16) anzeigt, dass die angebrachte Vorinstallations-Hilfsrahmen-Querstrebe (1a) horizontal ist;
j. Die Aktivierung der Nivellieranlage (17) unter der verbleibenden Schlammmatte (12) bis der andere Niveaufühler (16) anzeigt, dass eine zweite Vorinstallations-Hilfsrahmen-Querstrebe (1a) ebenfalls horizontal ist;
k. Die Aktivierung des Abdichtungssystems (18) in jeder Pfahlführung (2);
l. Das Pumpen von Eingussmaterial (24) in die Lücke zwischen jeder Pfahlführung (2) und ihrem zugehörigen installierten Pfahl (4).

## Revendications

1. Un procédé d'installation d'un caisson pour une tour de turbine éolienne comprenant les opérations suivantes :
a. la fourniture d'un sous-châssis de préinstallation (1),
b. la fourniture de capteurs de niveau (16) installés sur deux des traverses de châssis (1a) du sous-châssis de préinstallation (1),
c. la fourniture d'un système de nivellement (17) sous chaque patin (12) du sous-châssis de préinstallation (1),
d. la fourniture d'un système d'étanchéité à l'intérieur de chaque guide de pieu (2) du sous-châssis de préinstallation (1) vers l'extrémité supérieure de chaque guide de pieu (2),
e. le placement du sous-châssis de préinstallation (1) sur le plancher océanique,
f. l'installation de piles (4) dans le plancher océanique au travers des guides de pieu (2) du sous-châssis de préinstallation (1),
g. la détermination du patin situé le plus haut (12) au moyen de relevés provenant des capteurs de niveau (16),
h. l'activation du système de nivellement (17) sous le patin situé le plus haut (12) de façon à soulever le patin (12) et à créer un joint d'étanchéité entre le patin (12) et le plancher océanique,
i. la détermination d'un deuxième patin (12) au niveau de l'extrémité distale d'une traverse de sous-châssis de préinstallation (1a) équipée d'un capteur de niveau (16) et également raccordée au patin situé le plus haut (12), et le gonflage du sac de nivellement (17) sous ledit deuxième patin (12) de façon à soulever ledit deuxième patin (12) jusqu'à ce que ledit capteur de niveau (16) indique que la traverse de sous-châssis de préinstallation installée (1a) est horizontale,
j. l'activation du système de nivellement (17) sous le patin restant (12) jusqu'à ce que l'autre capteur de niveau (16) indique qu'une deuxième traverse de sous-châssis de préinstallation (1a) est également horizontale,
k. l'activation du système d'étanchéité (18) à l'intérieur de chaque guide de pieu (2),
l. le pompage de mortier (24) dans l'espace entre chaque guide de pieu (2) et sa pile associée installée (4).
